# EUROPÄISCHE PATENTSCHRIFT

(11) **EP 1 562 341 B1**
(45) Veröffentlichungstag und Bekanntmachung des Hinweises auf die Patenterteilung: **29.08.2012**
(21) Anmeldenummer: 04026963.1
(22) Anmeldetag: 12.11.2004
(51) Int. Cl.: H04L 29/06, H04L 29/08, H03M 7/30

(54) **Verfahren und Vorrichtung zur Beschleunigung des Web/WAP-basierten Zugriffs auf Informationen**
Method and apparatus for accelerating web/WAP-based information access
Méthode et dispositif pour accélérer l'accès aux informations par le web/WAP

(30) Priorität: 04.02.2004 DE 102004005467
(43) Veröffentlichungstag der Anmeldung: 10.08.2005
(73) Patentinhaber: Deutsche Telekom AG, 53113 Bonn (DE)
(72) Erfinder: Hasemann, Jörg-Michael, Dr., 27321 Emtinghausen (DE)
(74) Vertreter: 2K Patentanwälte Blasberg Kewitz & Reichel

(56) Entgegenhaltungen:
- WO-A-03/015362
- US-A- 5 293 379
- US-A1- 2003 051 056
- US-A1- 2003 208 366

## Beschreibung

Die Erfindung betrifft ein Verfahren und eine Vorrichtung zur Beschleunigung des Web/WAP-Zugriffs eines Endgerätes auf Informationen im Internet.

### Gebiet der Erfindung:

Der Zugriff auf Web- und WAP-Inhalte ist oftmals aufgrund der geringen Bandbreite der Netzwerke sehr zeitintensiv, insbesondere dann, wenn der Zugriff über bandbreitenbegrenzte Verbindung wie z. B. per Mobilfunk erfolgt.

Nach dem Stand der Technik gibt es verschiedene Verfahren, die Übertragungszeiten für Web/WAP-Inhalte zu reduzieren. Ansätze hierfür sind:
- Verschiedene Kompressionsverfahren zur Verringerung des Übertragungsvolumens.
- Die Adaption von Protokollen zur Verringerung von Latenzzeiten, z. B. bei Mobilfunkverbindungen das WTP (Wap Transfer Protocol).
- Clientseitiges Caching von Inhalten.

Durch Einsatz dieser Verfahren werden erhebliche Verbesserungen erzielt.

### Stand der Technik:

Aus der DE 101 02 157 ist ein Verfahren bekannt, das codierte Kurzinformationen verwendet, um längere Informationen zu ersetzen. Jedoch beachtet diese Erfindung nicht, dass speziell bei der Übertragung von Webseiten mit dynamischen Inhalten (z. B. Aktienportfolioansichten etc.) große Teile der Webseiten statisch sind und nur wenige dynamisch (die Aktienkurse z. B.).
Aus der US 2003/0208366 ist ein Verfahren bekannt, bei dem ein Verzeichnis an ein Gerät übertragen wird, sobald dieses sich an den Dienst anmeldet. Dieses Verzeichnis stellt abgekürzte Informationen bereit, die genutzt werden, um die Datenmenge zu reduzieren.

Bei der Erstellung dieser Seiten (z. B. mit Content Management Systemen) sind dynamische Inhalte genauso wie statische Templates/Textblöcke als solche bekannt. In diese Blöcke werden die dynamischen Daten eingepflegt bzw. eingefügt.

Aufgabe der Erfindung ist es, ein Verfahren und Vorrichtungen bereitzustellen, die eine Beschleunigung des Internetverkehrs ermöglichen.

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet.

Das hier beschriebene Verfahren beruht auf einem clientseitigen Verzeichnis (CV) auf dem Endgerät, das im Laufe der Nutzung von Webseiten aufgebaut wird. Dieses Verzeichnis ordnet Inhalten (z. B. Wörtern, Silben, Textpassagen, HTML/WAP-Strukturelemente, ...) Shortcodes zu. Diese Shortcodes sind vorzugsweise eineindeutig, d. h. jeder Shortcode bezeichnet genau einen Inhaltsblock. Die Inhalte, die in das CV aufgenommen werden sollen, werden als solche explizit im HTML/cHTML/WML-Text zusammen mit einer Transaktionsnummer gekennzeichnet. Auf der Basis des Wissens über statische und dynamische Inhalte von Inhalten, z. B. aufgrund des Zugriffs auf die Meta-Informationen eines Content Management Systems können somit dynamische und statische Inhalte bestimmt werden. Die statischen Inhalte können "en block" als durch Shortcodes zu ersetzende Blöcke identifiziert werden. Beim mehrmaligen Übertragen dieser so komprimierten Webseiten lassen sich sehr signifikante Übertragungsvoluminaeinsparungen erzielen.

Insbesondere handelt es sich um ein Verfahren zur Verbesserung der Übertragungsleistung von Web/WAP-Informationen zwischen einem Endgerät, insbesondere einem mobilen Endgerät, und einem Server, über ein Netzwerk, mit einem endgeräteseitigen Verzeichnis und einem serverseitigen Verzeichnis, wobei die Verzeichnisse Zuordnungen zwischen Inhalten und Shortcodes vornehmen, wobei durch Analyse der übertragenen Informationen statische und dynamische Bestandteile von Web/WAP-Informationen, insbesondere Seiten, bestimmt werden, um dann Verzeichniseinträge zu bestimmen, die die vollständigen statischen Bereiche einer Web/WAP-Information bestimmen.

Eine Synchronisation der Verzeichniseinträge zwischen dem Server und dem Endgerät erfolgt durch eine Einrahmung der Informationen mit der gleichzeitigen Übertragung des Shortcodes, wie sie weiter unten in einem Beispiel beschrieben wird.

Der Server in seiner Funktion als Proxy analysiert den Datenverkehr kontinuierlich und ist für eine Vielzahl von Endgeräten zuständig. Hierdurch kann der Server auf der Basis mehrmalig übertragener Informationen durch einen Informationsvergleich mit der Vergangenheit die statischen und/oder dynamischen Bestandteile einer Information, insbesondere einer Web/WAP-Seite, bestimmen. Dies kann auf der Basis von Checksummen erfolgen.

Damit nicht ständig alle Web/WAP-Informationen der Vergangenheit benötigt werden, kann ein iteratives Vorgehen erfolgen, bei dem schrittweise der statische Bereich erweitert wird, um dann anhand der vorhandenen Einträge in den Verzeichnissen zu erkennen, ob dieses Vorgehen erfolgreich war.

Um dies zu erreichen, sind auf dem Server und vorzugsweise auf dem Endgerät entsprechende benutzerspezifische Profile oder Verzeichnisse vorhanden, wobei vorzugsweise zusätzlich gleichartige Gruppen bestimmt werden können. Durch eindeutige Zuordnungen kann der Speicherplatz enorm reduziert werden, indem die Benutzerprofile nur die Shortcodes verwalten, die jeweils eindeutig einem gemeinsamen Pool von Informationen zugeordnet sind. Bei Systemen mit mehreren Benutzern oder Engeräten kann somit eine Einsparung erfolgen.

Dies kann insbesondere durch die beidseitige Verwendung von Proxies erreicht werden, die sowohl auf dem Endgerät als auch auf dem Server installiert sind, die Schnittstellen zwischen dem Server und den lokalen Anwendungen bilden.

Durch diese Erfindung sind folgende Vorteile erkennbar:
- Übertragungszeiten bei der Nutzung von Internet-Diensten können erheblich verkürzt werden.
- Nur minimale Änderungen an Browser-Software (Realisierung als einfache Plugins oder Proxies sind denkbar).
- Serverseitig können am Proxy beliebige Logiken zur Erkennung von ersetzungswürdigen Komponenten im Web/WAP-Verkehr des Nutzers implementiert werden.
- CVs werden benutzerspezifisch aufgebaut. Das bedeutet, dass entsprechend den Nutzungscharakteristiken des Nutzers (Sprache des Dokumentes, typischer Wortschatz, etc.) sich dieses im CV niederschlägt und daher optimale Ersetzungscharakteristiken erzielt werden können.
- Bei Dokumenten mit dynamischen Inhalten können die statischen Inhalte weitestgehend durch Shortcodes ersetzt werden. Im Endeffekt würden bevorzugt nur die dynamischen Inhalte übertragen werden. Hierdurch entsteht eine sehr erhebliche Verringerung des zu übertragenden Volumens einer Web/WAP-Seite mit den entsprechenden Vorteilen für den Nutzer (schnellere Übertragung, geringeres Volumen, geringere Kosten) und für den (Mobilfunk-)Netzbetreiber (höhere Kundenzufriedenheit, bessere Ressourcen-/Netznutzung bei gleichem Ergebnis, neue Ertragsquellen).
- Durch den dargestellten Piggy-Back-Mechanimus werden das clientseitige CV und das proxyseitige CV konsistent gehalten.
- Sollte es trotzdem zu Inkonsistenzen zwischen den CVs kommen, werden diese erkannt und transparent (für den Benutzer unsichtbar) gehandelt.
- Die Verwendung des Systems setzt bevorzugt die Nutzung eines Proxys voraus. Dieser Proxy sollte den Nutzer erkennen können, beispielsweise über die MSISDN bzw. über die IP-Adresse, um das nutzerspezifische PV verwenden zu können. Dieses ist implementationsspezifisch und könnte beispielsweise durch Zugriff auf einen Radius-Server oder ein entsprechendes LDAP-Verzeichnis geschehen. Im gleichen Zuge könnte dies zum Anlass genommen werden, die Berechtigung zur Nutzung des Proxys zu prüfen. Vorstellbar in diesem Zusammenhang ist, die Nutzung des Proxys gebührenpflichtig zu machen. Weiterhin kann die Identifikation durch eine eindeutige Checksumme erfolgen.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:

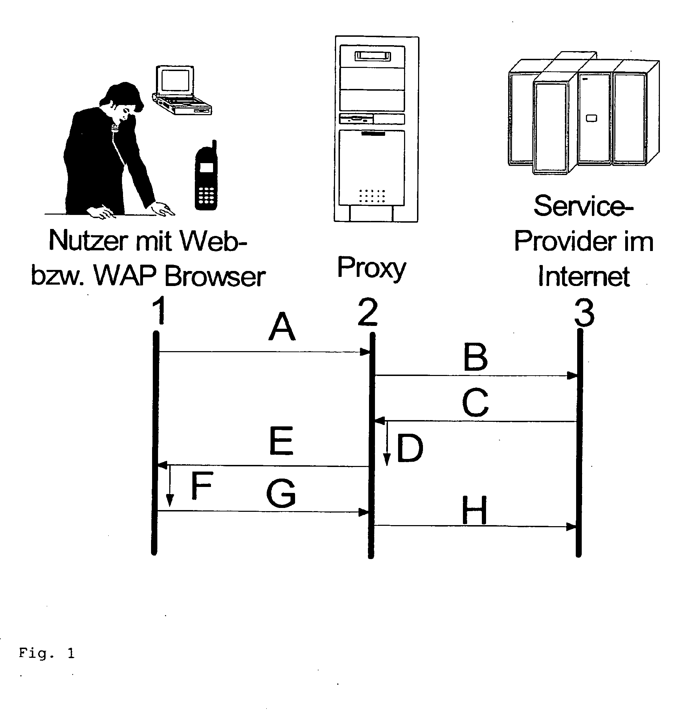

- Fig. 1: eine Ablaufbeschreibung der vorliegenden Erfindung in Form eines Kommunikationsprozesses.

Die Figur 1 zeigt folgenden Ablauf.
A. Der Benutzer besucht eine Web/WAP-Seite, z. B. http://www.irgendwas.de/index.html.
B. Der Proxy reicht die Anfrage weiter an www.irgendwas.de.
C. Die Web/WAP-Seite index.html von www.irgendwas.de wird an den Proxy gesendet.
D. Der Proxy untersucht unter Verwendung einer sinnvollen Logik den Inhalt der Web-/WAP-Seite, identifiziert ersetzungswürdige Inhalte, markiert diese innerhalb der Beschreibungssprache (HTML, cHTML, WAP etc.), ordnet ihnen nutzerspezifisch Shortcodes zu und definiert für die vorzunehmenden Ersetzungen eine eindeutige Transaktionsnummer. Auch diese Transaktionsnummer wird in den Text der Web/WAP-Seite eingefügt. Bei der Bestimmung der ersetzungswürdigen Inhalte wird auf statische Bestandteile abgestellt, die sich aus Statistiken oder Plausibilitätsbetrachtungen ergeben, wie z. B. Java-Codes oder Script-Sprachen, wie Java-Script, die in der Regel Menüs steuern und somit ersetzt werden könnten.

E. Die so modifizierte Web/WAP-Seite wird an den Nutzer weitergesandt.

F. Der modifizierte Web/WAP-Browser bzw. ein vorgeschalteter Proxy des Clients erkennt die vorzunehmenden Ersetzungen und führt diese im CV durch.

G. Beim nächsten Web/WAP-Seitenaufruf wird die Ergänzung im CV durch Mitteilung der Transaktionsnummer als Ergänzung zum Web/WAP-Seitenaufruf dem Proxy bestätigt.

H. Die Bestätigung wird aus dem Web/WAP-Seitenaufruf entfernt und die nachgefragte Web/WAP-Seite angefordert. Nicht dargestellt: Beim nächsten Liefern einer Web/WAP-Seite wird die aktuelle Transaktionsnummer vom Proxy dem Client mitgeliefert und die Ergänzungen zu den Änderungen im CV und PV im Sinne einer Datenbanktransaktion festgelegt.

Dies könnte wie im folgenden Beispiel 1 innerhalb des HTML/cHTML/WML-Dokumentes geschehen:

```
 <!DOCTYPE html PUBLIC "-//W3C//DTD HTML 4.01
 Transitional//EN">

 <dict>

 Der direkte Weg zum Kunden <id> 4343 </id>

 Forderungsmanagement <id> 4344 </id>

 Entwicklungszentrum Nord <id> 4345 </id>

 <t-id> 34234 </t-id>

 </dict>
 <html>
 
     <head>

          <meta http-equiv="content-type"
          content="text/html;charset=ISO-8859-1">

          <title> Der direkte Weg zum Kunden</title>
```

Die aufzunehmenden Einträge im CV sind durch entsprechende Marker <dict> für Beginn, </dict> für Ende sowie den jeweiligen ID's zusammen mit einer Transaktionsnummer mit HTML-Text gekennzeichnet.

Bei zukünftigen Abrufen werden nicht mehr die Inhalte selbst übertragen, sondern stattdessen nur deren Shortcodes. Dieses wird im folgenden Beispiel 2 deutlich:

```
 <!DOCTYPE html PUBLIC "-//W3C//DTD HTML 4.01
 Transitional//EN">

 <dict-t-id> 34234

 <html>

     <head>

          <meta http-equiv="content-type"
          content="text/html;charset=ISO-8859-1">

          <title>&4343&</title>
```

Bei zukünftigen Übertragungen wird dann nur noch der Shortcode übertragen. Hier im Beispiel wurde "Der direkte Weg zum Kunden" durch &4343& ersetzt, wobei die Syntax "&4343&" für die Referenzierung auf einen Shortcode nur beispielhaft ist. Andere Ausführungsbeispiele sind denkbar.

Das CV ist dabei nutzerabhängig und wird auf beiden Seiten der Verbindungsstrecke gleichermaßen (d. h. am Client und z. B. an einem Internet-Proxy) und synchron und konsistent aufgebaut.

Das entsprechende Pendant auf Proxy-Seite ist das Proxy-Verzeichnis (PV).

Die Konsistenz des CVs und des PVs wird durch ein Handshake sichergestellt. Dabei teilt der Client dem Proxy mit, dass eine durch die Transaktionsnummer spezifizierte Ergänzung zum CV vorgenommen worden ist. Diese Transaktion gilt als erfolgreich, wenn der Request mit dem Senden der nächsten Seite beantwortet wird.

Zweckmäßigerweise wird dieses Handshake, also piggy-backed, als Anhang zu einem http-request angefügt, beispielsweise:
http://www.irgendwas.de/index.html&34239&.

&34234& wäre in diesem Fall die Transaktionsnummer für die Ergänzung des obigen Inhaltes und des Shortcodes zum CV des Clients.

Wie in Beispiel 2 dargestellt, wird durch den <dict-t-id> im Dokument spezifiziert, welche CV-Version verwendet wird. Liegt diese lokal nicht mehr vor, weil sie gelöscht worden ist o. ä., wird diese Situation erkannt und im PV im Proxy zurückgesetzt und das Dokument anschließend transparent ohne Nutzung des CVs geladen. Das CV baut sich dann wie beschrieben sukzessive wieder von Null aus auf. Alternativen sind denkbar, dass anhand von bereichsweisen Kontroll-Informationen der fehlende Bereich entdeckt wird, um ihn erneut aufzubauen.

Der Proxy wird über die Rücksetzung über obigen Handshake-Mechanismus beispielsweise wie folgt informiert:
http://www.irgendwas.de/index.html&RESET& und liefert dann das die Seite http://www.irgendwas.de/index.html ohne oben dargestellte Ersetzung der CV-Einträge durch Shortcodes.

Im Rahmen der Erfindung sind zahlreiche Abwandlungen und Weiterbildungen der beschriebenen Ausführungsbeispiele verwirklichbar.

## Patentansprüche

1. Verfahren zur Verbesserung der Übertragungsleistung von Web/WAP-Informationen zwischen einem Endgerät, insbesondere einem mobilen Endgerät, und einem Server, über ein Netzwerk, mit einem endgeräteseitigen Verzeichnis und einem serverseitigen Verzeichnis, wobei die Verzeichnisse Zuordnungen zwischen Inhalten und Shortcodes vornehmen,
wobei in die zwischen dem Endgerät und dem Server ausgetauschten Web/WAP-Informationen, anstatt von Inhalten, Shortcodes auf der Basis der Verzeichnisse vor der Übertragung eingefügt werden, dass durch Analyse der zu übertragenden Informationen statische und dynamische Bestandteile von Web/WAP-Informationen, insbesondere Seiten, bestimmt werden, um dann Verzeichniseinträge zu bestimmen, die die vollständigen statischen Bereiche einer Web/WAP- Information bestimmen,
wobei eine Synchronisation der Verzeichniseinträge zwischen dem Server und dem Endgerät erfolgt, indem bei einer Übertragung von Web/WAP-Informationen eine Einrahmung der, durch Shortcodes zu ersetzenden Informationen durch Marker mit der gleichzeitigen Übertragung des zugehörigen Shortcodes erfolgt.

2. Verfahren nach einem oder mehreren der vorhergehenden Ansprüche, **dadurch gekennzeichnet, dass** die Inhalte Wörter, Silben, Textpassagen, HTML/WAP-Strukturelemente sind.

3. Verfahren nach einem oder mehreren der vorhergehenden Ansprüche, **dadurch gekennzeichnet, dass** der Server ein Proxy ist, der den Datenverkehr kontinuierlich analysiert und für eine Vielzahl von Endgeräten zuständig ist.

4. Verfahren nach einem oder mehreren der vorhergehenden Ansprüche, **dadurch gekennzeichnet, dass** der Server auf der Basis mehrmalig übertragener Informationen durch einen Informationsvergleich mit der Vergangenheit die statischen und/oder dynamischen Bestandteile einer Information, insbesondere einer Web/WAP-Information, bestimmt.

5. Verfahren nach einem oder mehreren der vorhergehenden Ansprüche, **dadurch gekennzeichnet, dass** auf der Basis der Abschätzung von statischen Informationen und dem folgenden Vergleich eine kontinuierliche Anpassung der statischen Bereiche bei nachfolgenden Übertragungen erfolgt.

6. Verfahren nach einem oder mehreren der vorhergehenden Ansprüche, **dadurch gekennzeichnet, dass** Endgeräte und/oder benutzerspezifische Profile und/oder Verzeichnisse erzeugt werden, wobei vorzugsweise zusätzlich gleichartige Gruppen bestimmt werden.

7. Verfahren nach einem oder mehreren der vorhergehenden Ansprüche, **dadurch gekennzeichnet, dass** ein Proxy auf dem Endgerät installiert ist, der die Schnittstelle zwischen dem Server und den lokalen Anwendungen bildet.

8. Verfahren nach einem oder mehreren der vorhergehenden Ansprüche, **dadurch gekennzeichnet, dass** bei der Feststellung einer Inkonsistenz zwischen den Verzeichnissen eine Anforderung der Information zur Synchronisation erfolgt.

9. Verfahren nach einem oder mehreren der vorhergehenden Ansprüche, **dadurch gekennzeichnet, dass** beim Aufbau einer Verbindung eine Checksumme des Verzeichnisses übertragen wird, um die Konsistenz zu überprüfen.

10. Endgerät zur Verbesserung der Übertragungsleistung von Web/WAP-Informationen zwischen einem Server, über ein Netzwerk,
- mit einem endgeräteseitigen Verzeichnis, das einem serverseitigen Verzeichnis entspricht, wobei die Verzeichnisse Zuordnungen zwischen Inhalten und Shortcodes vornehmen,
- mit einer Bearbeitungseinheit, die so eingerichtet ist, dass einerseits das endgeräteseitige Verzeichnis mit dem serverseitigen Verzeichnis synchronisiert gehalten wird, und andererseits die übertragenen Shortcodes durch Inhalte des Verzeichnisses ersetzt werden,
wobei durch Analyse der zu übertragenden Informationen statische und dynamische Bestandteile von Web/WAP-Informationen, insbesondere Seiten bzw. Seitenbestandteile, bestimmt werden, um dann Verzeichniseinträge zu bestimmen, die die vollständigen statischen Bereiche einer Web/WAP-Information bestimmen,
wobei eine Synchronisation von Verzeichniseinträge zwischen dem Server und dem Endgerät erfolgt, indem bei einer übertragung von Web/Wap - Informationen eine Einrahmung der, durch Shortcodes zu ersetzenden Informationen durch Marker mit der gleichzeitigen Übertragung des zugehörigen Shortcodes erfolgt.

11. Endgerät nach dem vorhergehenden Endgeräteanspruch, **gekennzeichnet durch** eine Einrichtung zur Durchführung der endgerätespezifischen Verfahrensschritte nach einem oder mehreren der vorhergehenden Verfahrensansprüche.

12. Server zur Verbesserung der Übertragungsleistung von Web/WAP-Informationen zwischen dem Server und einem Endgerät, über ein Netzwerk,
- mit einem serverseitigen Verzeichnis, das einem endgeräteseitigen Verzeichnis entspricht, wobei die Verzeichnisse Zuordnungen zwischen Inhalten und Shortcodes vornehmen,
- mit einer Bearbeitungseinheit, die so eingerichtet ist, dass einerseits das endgeräteseitige Verzeichnis mit dem serverseitigen Verzeichnis synchronisiert gehalten wird, und andererseits die übertragenen Shortcodes durch Inhalte des Verzeichnisses ersetzt und/oder die zu sendenden Inhalte durch Shortcodes ersetzt werden,
wobei durch Analyse der zu übertragenden Informationen statische und dynamische Bestandteile von Web/WAP-Informationen, insbesondere Seiten bzw. Seitenbestandteile, bestimmt werden, um dann Verzeichniseinträge zu bestimmen, die die vollständigen statischen Bereiche einer Web/WAP-Information bestimmen,
wobei eine Synchronisation von Verzeichniseinträge zwischen dem Server und dem Endgerät erfolgt, indem bei einer übertragung von Web/WAP - Informationen eine Einrahmung der, durch Shortcodes zu ersetzenden Informationen durch Marker mit der gleichzeitigen Übertragung des zugehörigen Shortcodes erfolgt.

13. Server nach dem vorhergehenden Serveranspruch, **gekennzeichnet durch** eine Einrichtung zur Durchführung der endgerätespezifischen Verfahrensschritte nach einem oder mehreren der vorhergehenden Verfahrensansprüche.

14. Software für einen Computer, **dadurch gekennzeichnet, dass** ein Verfahren nach einem oder mehreren der vorhergehenden Verfahrensansprüche implementiert ist.

15. Computersystem, **gekennzeichnet durch** eine Einrichtung, die den Ablauf eines Verfahrens nach einem oder mehreren der vorhergehenden Verfahrensansprüche erlaubt.

16. Endgerät, insbesondere ein mobiles Endgerät, **gekennzeichnet durch** eine Einrichtung, die den Ablauf eines Verfahrens nach einem oder mehreren der vorhergehenden Verfahrensansprüche erlaubt.

## Claims

1. A method for improving the transmission performance of web / WAP information between a terminal, in particular a mobile terminal, and a server, via a network, with a directory on the terminal side and a directory on the server side, wherein the directories associate contents and shortcodes,
wherein shortcodes based on the directories before transmission are inserted, instead of contents, into the web / WAP information exchanged between the terminal and the server, and wherein by analysing the information to be transmitted, static and dynamic components of web / WAP information, in particular pages, are determined, in order to subsequently determine directory entries which determine the complete static areas of a web / WAP information,
wherein a synchronisation of the directory entries between the server and the terminal is effected by framing the information to be replaced by shortcodes with markers and simultaneously transmitting the associated shortcode during a transmission of web / WAP information.

2. The method according to one or more of the preceding claims, **characterised in that** the contents are words, syllables, text passages, HTML / WAP structural elements.

3. The method according to one or more of the preceding claims, **characterised in that** the server is a proxy that continuously analyses the data traffic and is assigned to a plurality of terminals.

4. The method according to one or more of the preceding claims, **characterised in that** the server determines, based on information that has been transmitted several times; the static and/or dynamic components of an information, in particular of a web / WAP information, by comparison with historical data.

5. The method according to one or more of the preceding claims, **characterised in that**, based on the estimation of static information and the subsequent comparison, a continuous adaptation of the static areas is effected during subsequent transmissions.

6. The method according to one or more of the preceding claims, **characterised in that** terminals and/or user-specific profiles and/or directories are generated, wherein, in addition, similar groups are pereferably determined.

7. The method according to one or more of the preceding claims, **characterised in that** a proxy is installed on the terminal, the proxy forming the interface between the server and the local applications.

8. The method according to one or more of the preceding claims, **characterised in that** an information for synchronisation is requested in case an inconsistency between the directories is detected.

9. The method according to one or more of the preceding claims, **characterised in that** during the establishment of a connection, a checksum for the directory is transmitted in order to check consistency.

10. A terminal for improving the transmission performance of web / WAP information between a server, via a network,
- with a directory on the terminal side that corresponds to a directory on the server side, wherein the directories associate contents and shortcodes.
- with a processing unit configured to keep, on the one hand, the directory on the terminal side synchronised with the directory on the server side, and, on the other hand, to replace the transmitted shortcodes by contents of the directory,
wherein, by analysing the information to be transmitted, static and dynamic components of web / WAP information, in particular pages or components of pages, are determined, in order to subsequently determine directory entries which determine the complete static areas of a web / WAP information,
wherein a synchronisation of the directory entries between the server and the terminal is effected by framing the information to be replaced by shortcodes with markers and simultaneously transmitting the associated shortcode during a transmission of web / WAP information.

11. The terminal according to the preceding terminal claim, **characterised by** means to carry out the terminal-specific process steps according to one or more of the preceding method claims.

12. A server for improving the transmission performance of web / WAP information between the server and a terminal, via a network,
- with a directory on the terminal side that corresponds to a directory on the server side, wherein the directories associate contents and shortcodes,
- with a processing unit configured to keep, on the one hand, the directory on the terminal side synchronised with the directory on the server side, and, on the other hand, to replace the transmitted shortcodes by contents of the directory and/or the contents to be transmitted by shortcodes,
wherein, by analysing the information to be transmitted, static and dynamic components of web / WAP information, in particular pages or components of pages, are determined, in order to subsequently determine directory entries which determine the complete static areas of a web / WAP information,
wherein a synchronisation of the directory entries between the server and the terminal is effected by framing the information to be replaced by shortcodes with markers and simultaneously transmitting the associated shortcode during a transmission of web / WAP information.

13. The server according to the preceding server claim, **characterised by** means to carry out the terminal-specific process steps according to one or more of the preceding method claims.

14. A software for a computer, **characterised in that** it implements a method according to one or more of the preceding method claims.

15. A computer system **characterised by** means to allow the execution of a method according to one or more of the preceding method claims.

16. A terminal, in particular a mobile terminal, **characterised by** means to allow the execution of a method according to one or more of the preceding method claims.

## Revendications

1. Procédé d'amélioration du débit de transmission d'informations Web/WAP entre un terminal, notamment un terminal mobile, et un serveur par l'intermédiaire d'un réseau, avec un répertoire côté terminal et un répertoire côté serveur, les répertoires procédant à des affectations entre des contenus et des short-codes,
des short-codes sur la base des répertoires étant insérés, avant la transmission, dans les informations Web/WAP échangées entre le terminal et le serveur à la place des contenus, et des composants statiques et dynamiques d'informations Web/WAP, notamment des pages, étant déterminés par analyse des informations à transmettre, afin de déterminer ensuite des entrées de répertoires qui déterminent les parties statiques entières d'une information Web/WAP,
une synchronisation des entrées de répertoires étant effectuée entre le serveur et le terminal en encadrant, pour une transmission d'informations Web/WAP, les informations à remplacer par des short-codes, avec transmission simultanée du short-code correspondant.

2. Procédé selon l'une ou plusieurs des revendications précédentes, **caractérisé en ce que** les contenus sont des mots, des syllabes, des passages de texte, des éléments de structure HTML/WAP.

3. Procédé selon l'une ou plusieurs des revendications précédentes, **caractérisé en ce que** le serveur est un proxy qui analyse en continu le trafic de données et qui dessert une pluralité de terminaux.

4. Procédé selon l'une ou plusieurs des revendications précédentes, **caractérisé en ce que** le serveur détermine les composants statiques et/ou dynamiques d'une information, notamment d'une information Web/WAP, sur la base d'informations transmises à plusieurs reprises en recoupant les informations avec le passé.

5. Procédé selon l'une ou plusieurs des revendications précédentes, **caractérisé en ce que**, pour les transmissions qui suivent, les parties statiques sont adaptées en continu sur la base de l'évaluation d'informations statiques et du recoupement suivant.

6. Procédé selon l'une ou plusieurs des revendications précédentes, **caractérisé en ce que** des terminaux et/ou des profils spécifiques à l'utilisateur et/ou des répertoires sont générés, des groupes similaires étant, de préférence, déterminés en plus.

7. Procédé selon l'une ou plusieurs des revendications précédentes, **caractérisé en ce qu'**un proxy est installé sur le terminal qui constitue l'interface entre le serveur et les applications locales.

8. Procédé selon l'une ou plusieurs des revendications précédentes, **caractérisé en ce que**, si une inconsistance est constatée entre les répertoires, une requête de l'information pour synchronisation sera effectuée.

9. Procédé selon l'une ou plusieurs des revendications précédentes, **caractérisé en ce qu'**une somme de contrôle du répertoire est transmise lors de l'établissement d'une liaison, afin de vérifier la consistance.

10. Terminal permettant d'améliorer le débit de transmission d'informations Web/WAP entre un serveur par l'intermédiaire d'un réseau,
- avec un répertoire côté terminal correspondant à un répertoire côté serveur, les répertoires procédant à des affectations entre des contenus et des short-codes,
- avec une unité de traitement adaptée à synchroniser le répertoire côté terminal avec le répertoire côté serveur et à remplacer les short-codes transmis par des contenus du répertoire, des composants statiques et dynamiques d'informations Web/WAP, notamment des pages ou composants de pages, étant déterminés par analyse des informations à transmettre, afin de déterminer ensuite des entrées de répertoires qui déterminent les parties statiques entières d'une information Web/WAP,
une synchronisation des entrées de répertoires étant effectuée entre le serveur et le terminal en encadrant, pour une transmission d'informations Web/WAP, les informations à remplacer par des short-codes, avec transmission simultanée du short-code correspondant.

11. Terminal selon la revendication de terminal précédente, **caractérisé par** un dispositif permettant de réaliser les étapes de procédé spécifiques au terminal selon l'une ou plusieurs des revendications de procédé précédentes.

12. Serveur permettant d'améliorer le débit de transmission d'informations Web/WAP entre le serveur et un terminal par l'intermédiaire d'un réseau,
- avec un répertoire côté serveur correspondant à un répertoire côté terminal, les répertoires procédant à des affectations entre des contenus et des short-codes,
- avec une unité de traitement adaptée à synchroniser le répertoire côté terminal avec le répertoire côté serveur et à remplacer les short-codes transmis par des contenus du répertoire et/ou les contenus à transmettre par des short-codes, des composants statiques et dynamiques d'informations Web/WAP, notamment des pages ou composants de pages, étant déterminés par analyse des informations à transmettre, afin de déterminer ensuite des entrées de répertoires qui déterminent les parties statiques entières d'une information Web/WAP,
une synchronisation des entrées de répertoires étant effectuée entre le serveur et le terminal en encadrant, pour une transmission d'informations Web/WAP, les informations à remplacer par des short-codes, avec transmission simultanée du short-code correspondant.

13. Serveur selon la revendication de serveur précédente, **caractérisé par** un dispositif permettant de réaliser les étapes de procédé spécifiques au terminal selon l'une ou plusieurs des revendications de procédé précédentes.

14. Logiciel pour un ordinateur, **caractérisé en ce qu'**un procédé selon l'une des revendications de procédé précédentes est mis en oeuvre.

15. Système d'ordinateur, **caractérisé par** un dispositif permettant le déroulement d'un procédé selon l'une ou plusieurs des revendications de procédé précédentes.

16. Terminal, notamment un terminal mobile, **caractérisé par** un dispositif permettant le déroulement d'un procédé selon l'une ou plusieurs des revendications de procédé précédentes.
